# EUROPEAN PATENT SPECIFICATION

(11) **EP 3 097 757 B1**
(45) Date of publication and mention of the grant of the patent: **08.05.2019**
(21) Application number: 16163308.6
(22) Date of filing: 31.03.2016
(51) Int. Cl.: A01D 34/64, A01D 34/71, A01D 34/82, A01D 43/063, B60R 21/13

(54) **RIDING TYPE LAWN MOWER**
AUFSITZRASENMÄHER
TONDEUSE À GAZON AUTOPORTEE

(30) Priority: 27.05.2015 JP 2015107276
(43) Date of publication of application: 30.11.2016
(60) Divisional application: 18213414.8
(73) Proprietor: Iseki & Co., Ltd., Matsuyama-shi, Ehime 799-2692 (JP)
(72) Inventor: ENOMOTO, Wakao, Iyo-gun,, Ehime 791-2193 (JP); GOTO, Renshi, Iyo-gun,, Ehime 791-2193 (JP); KITAHARA, Yusuke, Iyo-gun,, Ehime 791-2193 (JP)
(74) Representative: TBK

(56) References cited:
- EP-A1- 2 559 333
- EP-A1- 2 870 854

## Description

### [Technical Field]

The present invention relates to a riding type lawn mower which collects lawn grasses cut by a mower into a collector.

### [Background Art]

Conventionally, there is a riding type lawn mower which is structured so that lawn grasses cut by a mower mounted between a front wheel and a rear wheel are conveyed by air flow by a blower via a conveyance duct (shooter) provided on the lower side of a vehicle body, and collected in a collector (storage container) on the rear side of a vehicle body.

For example, Patent Document 1 listed below discloses the structure of a riding type lawn mower with so-called high dump specifications in which a lift link mechanism is provided at a coupling part between a travelling vehicle and a collector so that the collector moves vertically with respect to the travelling vehicle, and thus the collector is moved vertically at the time of discharging lawn grasses so as to discharge the lawn grasses from a relatively high position. According to Patent Document 1, the collector can be attached and removed to and from a support frame on the rear part of the travelling vehicle while leaving the support frame, so that it is possible to attached necessary equipment to the support frame.

Furthermore, Patent Document 2 listed below discloses the structure of a riding type lawn mower with so-called low dump specifications in which lawn grasses are discharged from a collector at a relatively low position closer to the ground. According to Patent Document 2, a bracket arm provided on the upper part of a hitch bracket on the rear part of the travelling vehicle, and a piston of a dump cylinder and a hitch arm on the upper part of the collector are coupled by a coupling pin and a dump pin which are integral with each other in a two-pronged fashion, so that the collector can be easily attached and removed to and from the hitch bracket by inserting and extracting the coupling pin and the dump pin.

Furthermore, Patent Documents 3 and 4 listed below disclose the structure of a small-sized riding type working machine provided with a ROPS. According to the documents concerned, the ROPS is folded by turning backward from the upper side of a driving seat about a lateral axis, thereby enabling the ROPS to be used selectively at the time of driving and at the time of conveyance. In addition, the ROPS is a safety frame for protecting a driver upon turning over or falling down.

### [Citation List]

[Patent Document 1] Japanese Unexamined Patent Application Publication No. 2013-39094
[Patent Document 2] Japanese Unexamined Patent Application Publication No. 2012-223153
[Patent Document 3] Specification of US Patent Application Publication No. 2011/0248488
[Patent Document 4] Specification of European Patent Application Publication No. 2314483
   EP 2 870 854 A1 discloses a riding type lawn mower having the features of the preamble of claim 1.

### [Summary of the Invention]

### [Problems to be Solved by the Invention]

The riding type lawn mower disclosed in Patent Document 1 described above, necessary equipment can be attached to the support frame even after the collector is removed, and thus the travelling can be facilitated. Furthermore, the riding type lawn mower disclosed in Patent Document 2 described above can easily attach and remove the collector, thereby improving workability.

On the other hand, in the documents concerned, the safety is not ensured at the time of turning over the riding type lawn mower or falling down therefrom. Different from working vehicles such as a tractor, the riding type lawn mower travels on a flat field and thus has a small risk of turning over. The need for carrying protective appliances for an operator thus has not been envisaged. However, it becomes safer for an operator to carry protective appliances depending on the circumstance of a field and the working conditions, such as travelling in a wooden place.

Furthermore, Patent Documents 3 and 4 disclose the structure of providing a ROPS for a tractor, however, the riding type lawn mower is not taken into consideration.

The object of the present invention is to provide a riding type lawn mower in which a ROPS can be mounted as appropriate on a riding type lawn mower with high dump specifications, thereby enhancing safety.

### [Means for Solving the Problems]

The above-described problems of the present invention will be solved by the means for solving as follows.

The object is achieved by a riding type lawn mower having the features of independent claim 1. Further advantageous developments are set out in the dependent claims.

### [Advantageous Effects of Invention]

According to the present invention, the chain case coupling frame serves as a vehicle body frame constituting a part of the vehicle body. Therefore, the collector support frames are attached to the chain case coupling frame via the collector lower frames so as to strengthen the support structure of the ROPS provided there above. Since the ROPS frame attached to the upper part of the collector support frames has the width narrower than the collector support frames, no burden is placed on the collector support frames. Then, the storage container is supported by the collector support frames having the width wider than the ROPS frame, and thus it is possible to stabilize the elevation and discharge operations of the storage container of the lawn mower with high dump specifications so as to improve the efficiency of mowing and collecting works of grasses.

Coupling the right and left collector support frames by the collector support frame coupling pipe provides the firmer support structure. Then, providing the lamp on the collector support frame coupling pipe makes it possible to effectively utilize a space formed by the collector support frames. Furthermore, the lamp does not become an obstacle to the turning of the ROPS frame, thereby improving workability.

### [Brief Description of the Drawings]

Fig. 1 is an overall side view of a riding type lawn mower (low dump specifications) according to a not claimed comparative example useful for understanding the present invention.
Fig. 2 is an enlarged side view of a rear part of a riding type lawn mower in Fig. 1.
Fig. 3 is a front view of a collector support frame of a riding type lawn mower in Fig. 1.
Fig. 4 is a perspective view of an attachment part for a dump cylinder in Fig. 3.
Fig. 5 is a simplified side view of a chain case part.
Fig. 6 is a perspective view of a rear part of a chain case.
Fig. 7(A) is a front view of another example of ROPS; Fig. 7(B) is a side view showing a ROPS frame in a turning state.
Fig. 8 is a side view in the vicinity of a driving seat of a riding type lawn mower in Fig. 1.
Fig. 9 is a front view of another example of ROPS.
Fig. 10 is a side view of a ROPS part in Fig. 9.
Fig. 11 is a side view of another example of ROPS.
Fig. 12(A) is a front view of another example of ROPS; and Fig. 12(B) is an explanatory view (front view) at the time of storing ROPS.
Fig. 13(A) is a side view of Fig. 12(A); and Fig. 13(B) is a side view showing the state where ROPS is stored.
Fig. 14 is an overall side view of a riding type lawn mower (high dump specifications) according to an embodiment of the present invention.
Fig. 15 is a partial schematic cross-sectional plan view of a riding type lawn mower in Fig. 14.
Fig. 16 is a schematic side view for explaining the elevation operation of a collector.
Fig. 17 is a schematic side view for explaining the opening/closing operation of an openable lid of a collector.
Fig. 18 is a side view showing the state where a mowed grass collecting unit in Fig. 14 is arranged in the rear of a support frame of a riding type lawn mower.
Fig. 19 is a side view of a coupling part between a support frame of riding type lawn mower in Fig. 14 and a coupling body.
Fig. 20 is a front view of a support frame part.
Fig. 21 is a perspective view showing a right surface side of a floor.
Fig. 22 is a simplified perspective view (schematic diagram) explaining the operations of a forward movement pedal and a backward movement pedal
Fig. 23(A) is a left side view in the vicinity of a steering post; and Fig. 23(B) is a right side view of a backward movement pedal part (when the PTO lever is turned off).
Fig. 24(A) is a left side view in the vicinity of a steering post; and Fig. 24(B) is a right side view of a backward movement pedal part (when the PTO lever is turned on).
Fig. 25 is a rear view in the vicinity of the PTO lever in Fig. 23.
Fig. 26 is another example (side view) of the backward movement pedal part.
Fig. 27(A) is a right side view of a backward movement pedal part in the case where an intermediate link is provided a backward movement restraining cable; and Fig. 27(B) is an enlarged view of the intermediate link.
Fig. 28 is a side view showing a working state of a brake pedal.

### [Description of the Embodiments]

### [Examples]

With reference to the figures, embodiments of the present invention and comparative examples will be described below.

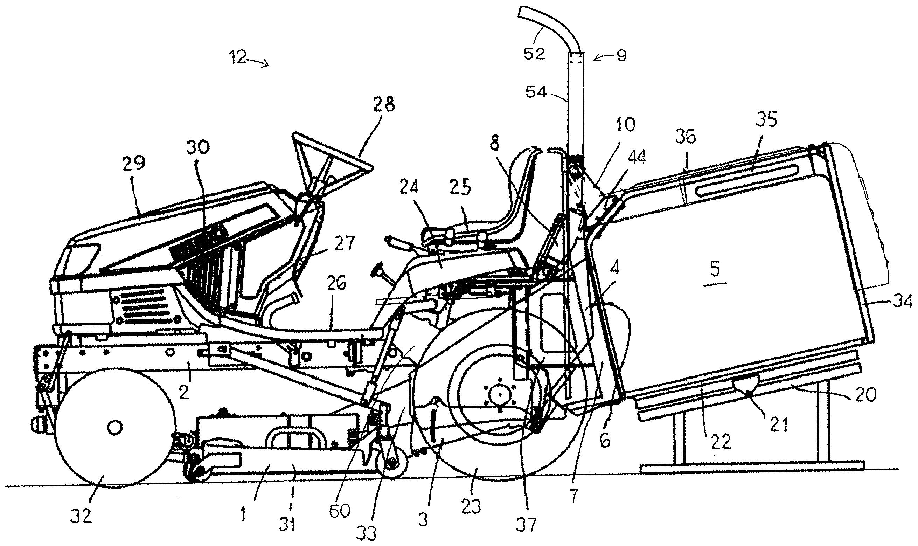

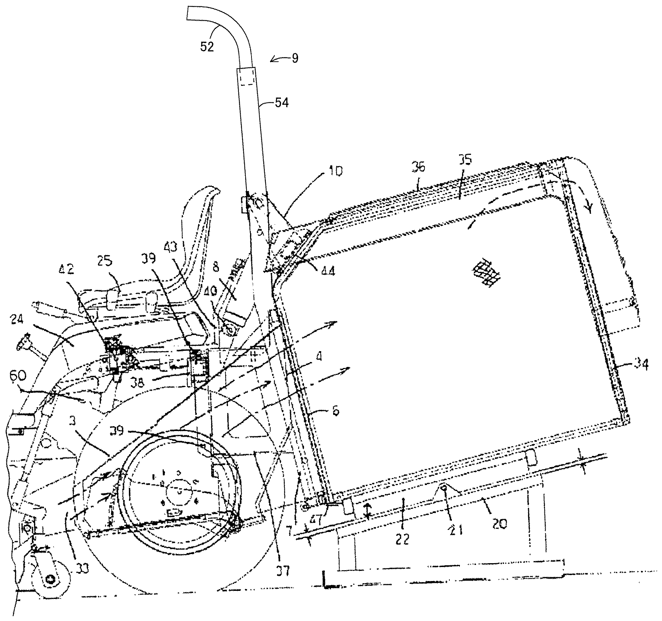

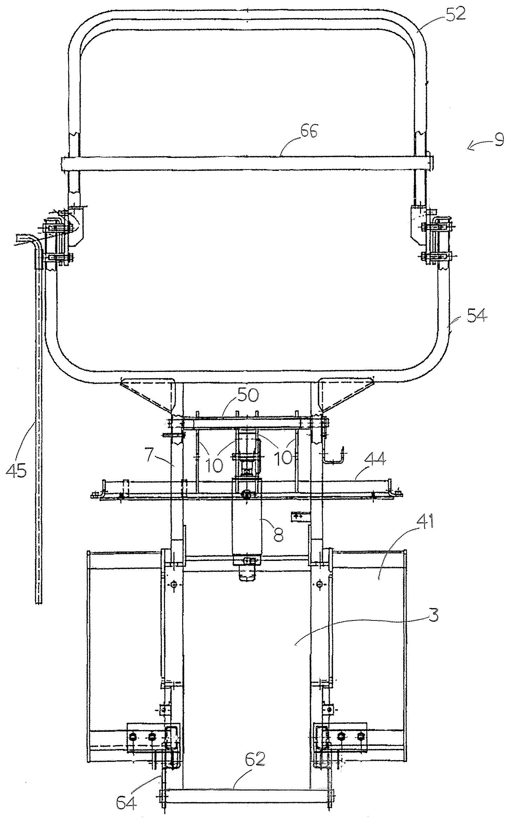

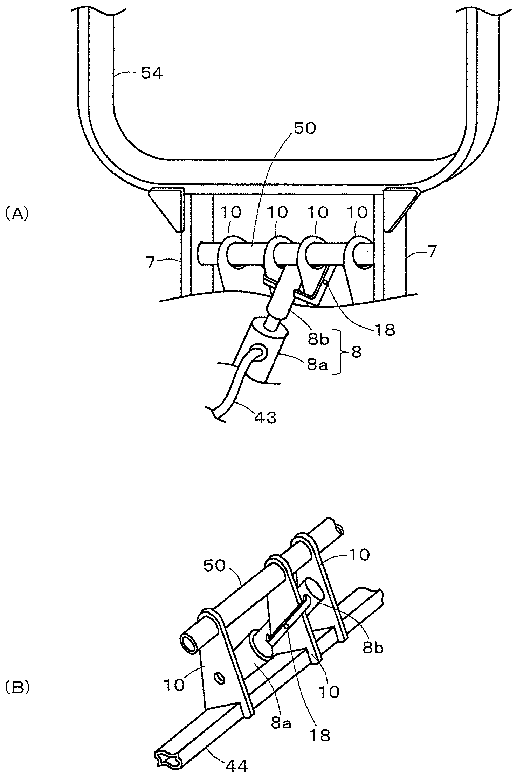

Fig. 1 shows an overall side view of a riding type lawn mower 12 with low dump specifications, and Fig. 2 shows an enlarged side view of a rear part of the riding type lawn mower 12 in Fig. 1. Furthermore, Fig. 3 shows a front view of a collector support frame part, and Fig. 4 shows a perspective view (simplified view) of an attachment part for a dump cylinder in Fig. 3. In addition, right and left herein refer to the left and right directions in the advancing direction of the riding type lawn mower.

In the riding type lawn mower 12 of this embodiment, which constitutes a not claimed comparative example useful for understanding the present invention, a mower (grass cutting device) 1 is mounted on a belly part of a vehicle body frame 2, and a collector (grass collecting container) 5 is removably mounted in the rear part of the vehicle body frame 2 via collector support frames 7, so that lawn grasses cut by the mower 1 are stored in the collector 5 through a shooter (conveyance duct) 3.

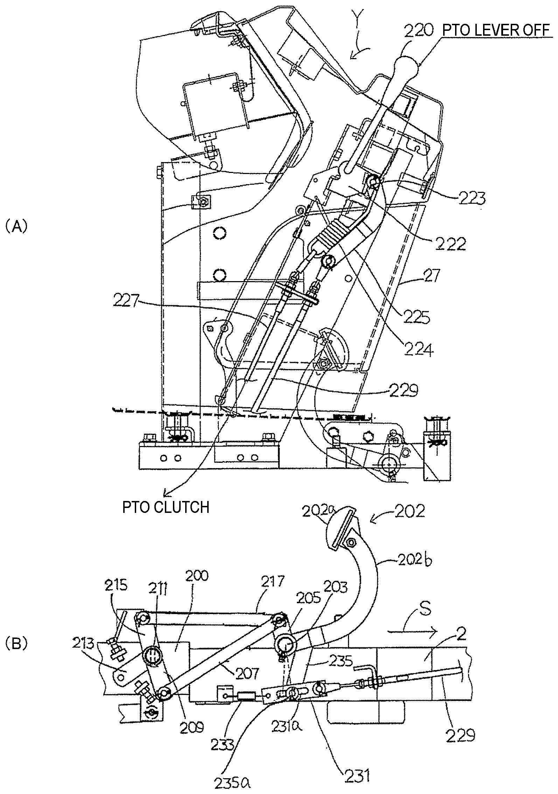

Then, a driving seat 25 is provided between right and left fenders 24 above a rear wheel 23, and a steering handle 28 is arranged above a steering post 27 on the front side via a floor 26. An engine 30 is mounted underneath a bonnet 29 on the front side, and rotary power of the engine 30 is decelerated as appropriate via a transmission composed of a hydraulic static transmission 200 (hereinafter referred to as a HST: Fig. 23), etc. The decelerated rotary power is transmitted to rotate the rear wheels 23, 23, a blade 31 of the mower 1, etc., by a transmission member, such as a chain sprocket and the like, that is provided inside chain cases (traveling transmission cases) 60, 60 on the right and left side of the vehicle body, thereby cutting lawn grasses while a vehicle is traveling.

Steering of the riding type lawn mower is conducted by steering a front wheel 32 by the handle 28. The shooter 3 is formed from a rear discharge port 33 of the mower 1 through a space between treads of the rear wheel 23 below the driving seat 25 to the rear end part of the vehicle body frame 2. An opening 6 is formed at the rear end part so that the lawn grasses cut by the rotation of the blade 31 is conveyed rearward and upward so as to be discharged backward from the opening 6.

A pair of the collector support frames 7 structured on the rear part of the vehicle body frame 2 is structured to be provided on both the right and left sides and extend in the vertical direction.

The front end opening 6 of the collector 5 which is linked to a rear side surface of each of the collector support frames 7 is in communication with the duct port 4. It is structured so that a dividing plate is provided an outer peripheral part of the duct port 4, or a net for preventing leakage of the stored lawn grasses is formed in an outer peripheral part of the opening 6, so that the lawn grasses discharged from the duct port 4 are unerringly collected in the collector 5 so as to avoid leakage of the lawn grasses.

Furthermore, the collector 5 is structured by providing a ventilative net in a stretched manner in an outer periphery of a box-shaped collector frame 34, and a cover 36 in which an exhaust air chamber 35 is formed is attached to a ceiling part thereof. A hitch arm 10 is projected toward the upper part of an attachment plate 44 which is fixed on the front end of the collector frame 34.

Each of the collector support frames 7 has a hitch bracket 37 on the front side, and is removably attached to a rear hitch 38 in the rear part of the vehicle body frame 2 by a hitch pin 39. A cylinder main body 8a of a dump cylinder 8 (Fig. 4) is attached to the central part of the hitch bracket 37 by a set pin 40 so as to be able to freely turn upward and downward. A hydraulic case 42 is provided in a chain case 60 in the rear part of the vehicle body frame 2, and a hydraulic hose 43 is provided from the hydraulic case 42 to the dump cylinder 8, so that the collector 5 can be dumpingly turned by operating a control valve of the hydraulic case 42 to actuate (expand and contract) the dump cylinder 8.

A front receiving plate 41 for receiving the front side of the collector 5 is attached to the outer side of each of the left and right collector support frames 7.

A plurality of (four) hitch arms 10 is arranged in right and left direction of the bodywork, and a piston tip end part 8b of the dump cylinder 8 is attached to two hitches on the inner side from both right and left sides by a pin 18. Furthermore, the upper end of the hitch arms 10 is turnably coupled to a coupling frame 50 between the right and left collector support frames 7. Therefore, when the dump cylinder 8 extends, the collector 5 turns backward with the coupling frame 50 as a supporting point so as to discharge the lawn grasses from the opening 6.

In addition, the coupling part of the collector 5 to the coupling frame 50 may be composed of a pin, a bolt, a nut, or the like so as to be structured so that the collector 5 can be removed from the collector support frames 7. In such a case, when a collector mounting platform 22 which swings in a seesaw-like manner about a support shaft 21 extending in the right-and-left lateral direction is provided in a support platform 20 on which the collector 5 is mounted and supported, the collector 5 received on the collector mounting platform 22 can be coupled and removed to and from the collector support frames 7 while swinging upward and downward.

Then, the riding type lawn mower 12 of this embodiment is characterized in that a ROPS 9 is provided above the collector support frames 7. Specifically, a U-shaped ROPS support frame 54 having the right and left width larger than that of the collector support frames 7 is provided to the upper end of the collector support frames 7 by securing means such as welding so as to set the opening in the upward direction, and a ROPS frame 52 is attached to right and left upper end parts of the ROPS support frame 54 by a fixture such as a bolt, a nut, etc., so as to be able to turn in the back-and-forth direction.

The ROPS frame 52 has a U-shaped form having an opening in the lower part, and each of the lower end parts is coupled to right and left upper portions of the ROPS support frame 54, respectively.

In this structure, the right and left collector support frames 7 are utilized to form on the upper part thereof the ROPS 9 composed of the ROPS support frame 54 and the ROPS frame 52, so that it is possible to easily place the ROPS with a simple structure, which is resultingly a reasonable arrangement. Furthermore, thanks to the dump cylinder 8 of the collector 5 attached to the coupling frame 50 via the hitch arms 10, the structure is not become complicated, and also the dump cylinder 8 can be arranged reasonably.

A scraping bar 45 by which an operator (driver) scraps out grasses inside the collector 5 at the time of discharging mowed grasses is removably attached to one of right and left sides of the ROPS support frame 54.

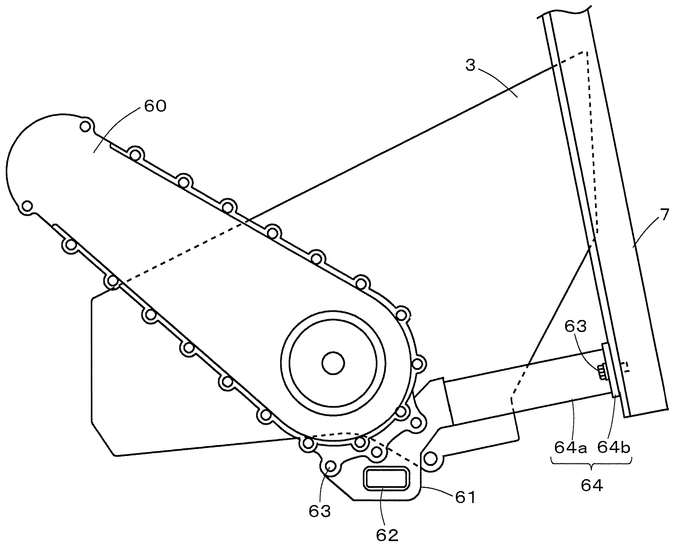

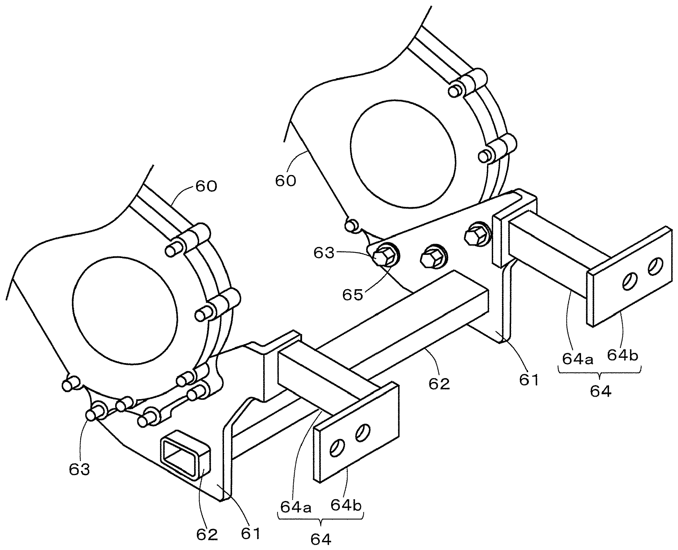

Fig. 5 shows a simplified side view of the chain case 60, and Fig. 6 shows a perspective view of the rear part of the chain case 60.

The lower end part of the collector support frames 7 is coupled to right and left collector lower frames (projecting frames) 64, 64 which project backward from a chain case coupling frame 62 coupling the right and left chain cases 60, 60. Specifically, support frames 61 of the chain case coupling frames 62 are fixed to the right and left rear end parts of the right and left chain cases 60, 60 by bolts 63 and nuts 65, and the collector support frames 7 are fixed by bolt tightening to the rear surface of the collector lower frames 64 which are secured to the rear end parts of the support frames 61 so as to project therefrom in a rear direction.

Attaching the ROPS to a working vehicle adds weight by the amount thereof to a vehicle body, and thus it becomes necessary to increase the strength of the support structure. According to the present structure, the chain case coupling frame 62 is a member for coupling the rear wheels 23, 23, as well as serves as a vehicle body frame constituting a part of the vehicle body. Therefore, the collector support frames 7 is attached to the chain case coupling frame 62 via the support frame 61 and the collector lower frame 64 so as to strengthen the support structure of the ROPS 9 provided thereabove.

Furthermore, right and left sides of the ROPS frame 52 are coupled by a ROPS frame coupling pipe 66 (Fig. 3) so as to ensure the strength of the ROPS 9.

Then, the shooter 3 is arranged in a slanting posture with a rear rising state between the mower 1 and the collector 5, and the shooter 3 is provided above the chain case coupling frame 62 and also between the right and left collector support frames 7, 7.

Therefore, the shooter 3 for conveying lawn grasses that extends from the mower 1 to the collector 5 is placed in a space part formed of the chain case coupling frame 62, the right and left collector support frames 7, 7, etc., so that it is possible to make use of the space, resulting in efficient arrangement.

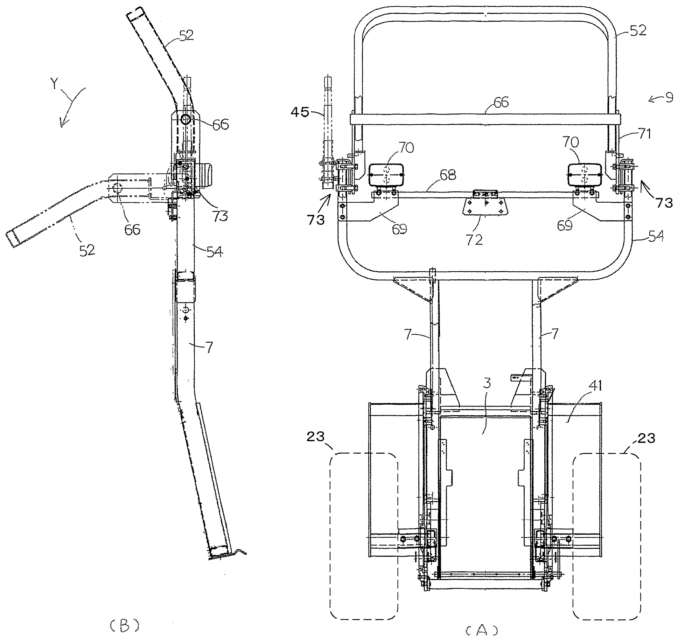

Furthermore, Fig. 7(A) shows another example of the ROPS 9, and Fig. 7(B) shows a side view of the ROPS frame 52 in a turning state. In addition, Fig. 7(A) does not illustrate the dump cylinder 8.

As shown in Fig. 7(A), right and left sides of the ROPS support frame 54 are also coupled by a ROPS support frame coupling pipe (ROPS support frame coupling body) 68 so as to provide a strengthened support structure. The ROPS support frame coupling pipe 68 is coupled to the ROPS support frame 54 via support members 69 such as stays or brackets. Then, working or driving lamps 70 such as winkers, brake lamps, emergency lamps, working lamps, etc., are attached to the ROPS support frame coupling pipe 68, so that the attachment is structured to be simple, thereby enabling the space formed of the ROPS support frame 54 to be used effectively. Furthermore, a number plate 72 may be attached.

Furthermore, the ROPS frame 52 may be structured to be able to turn forward (the direction of an arrow Y) with a coupling part 73 to the ROPS support frame 54 as a supporting point. The ROPS frame 52 can be easily attached and removed to and from the ROPS support frame 54 by mounting a fastener such as a bolt, a nut, a pin, a screw, etc., via a support 71 such as a bracket so as to configure a coupling part 73. In no-working time, the ROPS 9 is folded to provide a compact structure. Furthermore, the lamps 70 are provided on the ROPS support frame coupling pipe 68 between the right and left sides of the ROPS support frame 54, so that the turning of the ROPS frame 52 is not prevented, thereby improving workability.

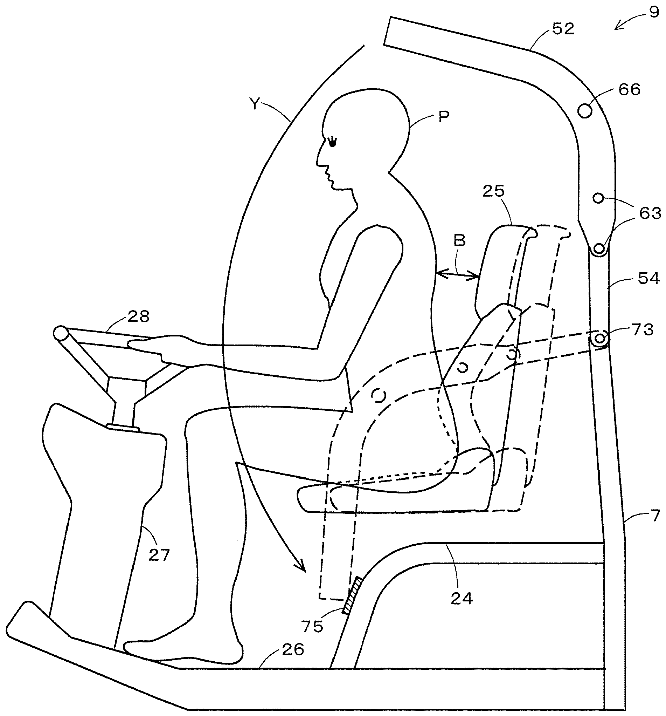

Furthermore, Fig. 8 shows a side view in the vicinity of the driving seat 25. When the ROPS frame 52 and the ROPS support frame 54 are turned forward (the direction of an arrow Y) passing between the handle 28 and the driving seat 25, the upper right and left ends part of the ROPS frame 52 moves to the front part of the fender 24 below the driving seat 25. An elastic body 75 such as rubber is provided at the part coming into contact with the fender 24, so that, even if the ROPS 9 is turned, the elastic body 75 serves as a buffer material so that the ROPS frame 52 and the fender 24 can be protected. In addition, an operator P stands on the floor 26 and then sits down on the seat after pulling down the ROPS 9.

Then, the operator (driver) P can adjust the driving seat 25 to the position easy to drive by sliding the seat in the front-back direction (in the direction of an arrow B), while it is not necessary for the operator P to adjust the fore-and-aft position of the driving seat 25 at the time of turning the ROPS 9. More specifically, the turning of the ROPS 9 is not affected wherever the driving seat 25 is positioned. Therefore, thanks to the ROPS 9 capable of being pulled down by turning forward to the position where the driving operation by the operator is not affected, it becomes easier to turn the ROPS 9, and also the space for the operator P can be ensured. The operation at the time of pulling down the ROPS 9 is for preventing the ROPS 9 from coming into contact with trees at the time of cutting grasses in the trees.

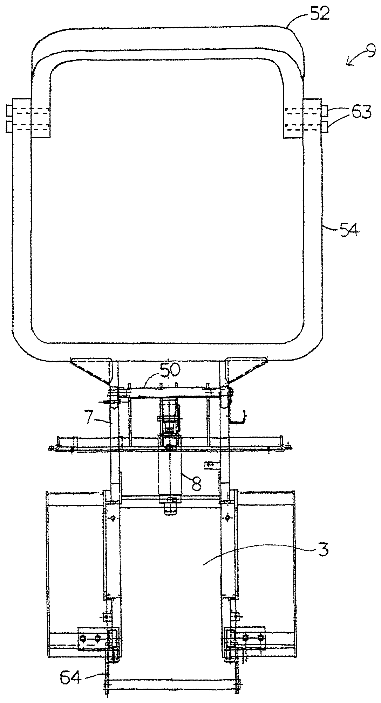

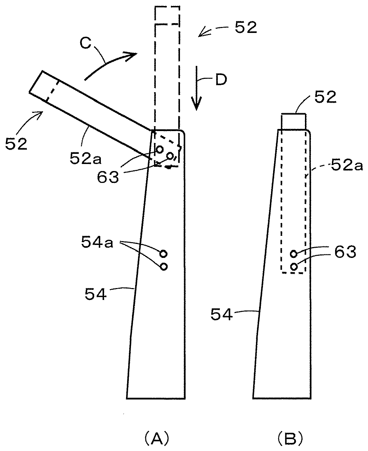

Furthermore, Fig. 9 shows another example of the ROPS 9, and Figs. 10(A) and (B) show side views of the ROPS 9 in Fig. 9.

This example shows the case where the ROPS frame 52 can be stored between the right and left sides of the ROPS support frame 54. The length between right and left outer sides of the ROPS frame 52 is set to be approximately equal to the length between right and left inner sides of the ROPS support frame 54 so that the ROPS frame 52 internally comes into contact with the right and left sides of the ROPS support frame 54.

The lower end part of the ROPS frame 52 is coupled to right and left sides of the upper end part of the ROPS support frame 54 by bolts 63. Therefore, the ROPS frame 52 can be stored between right and left sides of the ROPS support frame 54 by unbolting the bolt 63 to turn the ROPS frame 52 backward (the direction of an arrow C), and then sliding the ROPS frame 52 downward (in the direction of an arrow D), as shown Fig. 10(B). If a slide rail (not shown) is provided on the right and left inner sides of the ROPS support frame 54, the ROPS frame 52 can be easily slid, and the storage posture thereof becomes stable without bolt tightening again after sliding. Furthermore, the ROPS support frame 54 may be provided on the right and left inner sides thereof with not the rail but a storage box having a box shape (rectangle in cross section) into which the entire of a vertical part 52a of the ROPS frame 52 can be fit.

A plurality of bolt holes 54a is opened also on the upper part of the ROPS support frame 54 as shown at the central part in Fig. 10(A), and thus the ROPS frame 52 can be fixed to the ROPS support frame 54 by changing the positions of the holes. Furthermore, a number of fixing positions of the bolts 63 can be provided at a plurality of locations by providing the holes also in the ROPS frame 52 (two holes in the illustrated example), so that the ROPS frame 52 can be fixed with stability. Furthermore, if a plurality of upper holes is provided to be arranged in the form of a segment of a circle on the upper part of the ROPS support frame 54, it is possible to set the forward turning angle of the ROPS frame 52 in a stepwise fashion with the bolt 63 in the lower hole as a supporting point. Furthermore, if the upper hole on the upper part of the ROPS support frame 54 is made to be a long hole, it is possible to set the forward turning angle in a continuous fashion.

The structures described above in which the ROPS support frame 54 is provided with a slide rail or a storage box, the ROPS support frame 54 is provided with a plurality of holes, and the hole is made to be a long hole, are common to other embodiments of the ROPS 9.

When the ROPS 9 becomes an obstacle to works, for example, under a tree, the height can be reduced by storing the ROPS frame 52 between the right and left sides of the ROPS support frame 54. This makes the structure compact, thereby increasing workability.

In addition, Fig. 10 shows the case where the bolt 63 is removed from the ROPS frame 52 and the ROPS support frame 54, and the ROPS frame 52 slides to be stored between the right and left sides of the ROPS support frame 54. However, the structure capable of storing the ROPS frame 52 between the right and left sides of the ROPS support frame 54 without unbolting the bolt 63 makes the storing operation easy, not to be burdens on the operator.

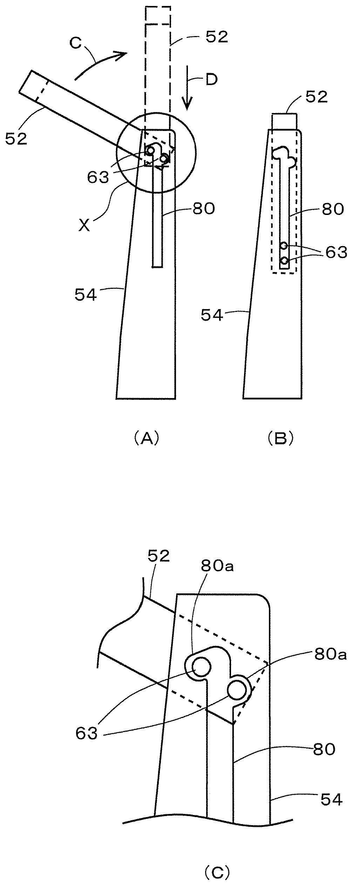

Figs. 11(A) and 11(B) show side views of another examples of the ROPS 9, and Fig. 11(C) shows an enlarged view of a circular frame X in Fig. 11(A). In addition, the front view of the ROPS 9 in this case is the same as that in Fig. 9.

In this example, the ROPS support frame 54 is provided with a groove 80 passing the bolts 63 therethrough. As shown in Fig. 11(C), the upper end of the groove 80 is formed in a Z-shape in a side view, so that the bolts 63 can be caught on the Z-shaped end part 80a to be fixed by shifting back and forth. Furthermore, when the ROPS frame 52 is turned in the direction of an arrow C, the positions of the bolts 63 are arranged in a vertical line. Therefore, the ROPS frame 52 can be stored between the right and left sides of the ROPS support frame 54 by sliding in the direction of an arrow D. Also at the time of storing, the bolts 63 are caught on the groove 80 so that it is possible to fix the ROPS frame 52 with stability.

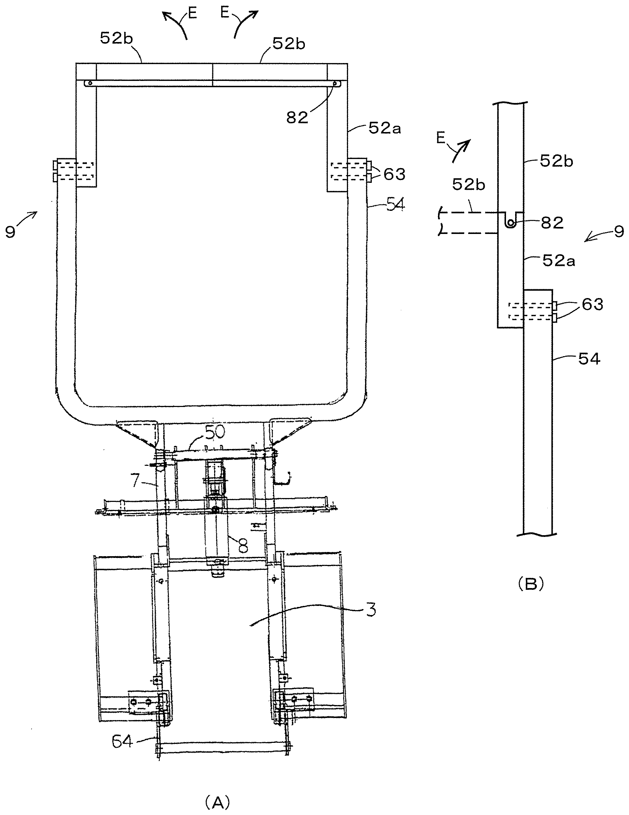

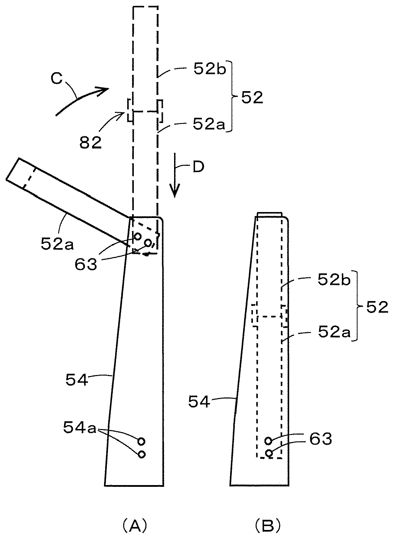

Fig. 12(A) shows a front view of another example of the ROPS 9, Fig. 12(B) shows an explanatory view (front view) at the time of storing the ROPS 9, and Figs. 13(A) and 13(B) show side views of Fig. 12(A) and 12(B).

These figures show an example which allows for more compact storage of the ROPS 9. The ROPS frame 52 is composed of a vertical ROPS frame 52a on the lower part and a horizontal ROPS frame 52b on the upper part, and the horizontal ROPS frame 52b can be split into right and left at the central part.

Therefore, each horizontal part 52b, 52b is turned outward and upward toward the right and left (the direction of an arrow E), respectively, with a coupling part (such as a pin) 82 to the vertical ROPS frame 52a as a supporting point, so that the vertical ROPS frame 52a and the horizontal ROPS frame 52b are arranged in a vertical line, as shown in Fig. 12(B).

Then, similar to the other examples, the ROPS frame 52 is turned backward (the direction of an arrow C) to slide the ROPS frame 52 downward (the direction of an arrow D), so that the ROPS frame 52 can be stored between the right and left sides of the ROPS support frame 54, as shown in Fig. 13(B).

This structure eliminates the upper end part (horizontal part 52b) of the ROPS frame 52 which extends in the lateral direction at the time of storage, and thus more compact structure is achieved, thereby improving workability.

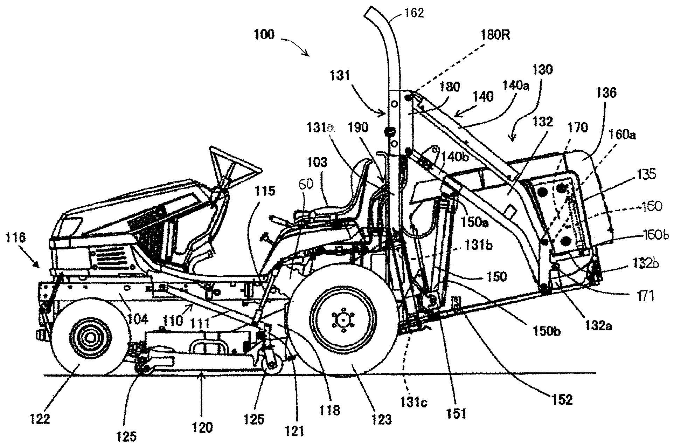

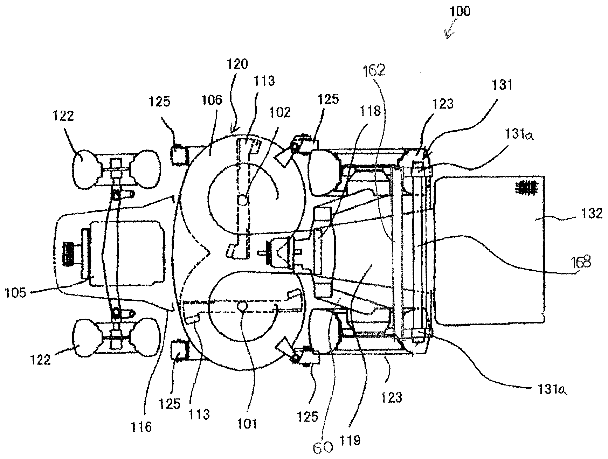

Fig. 14 shows an overall side view of the riding type lawn mower with high dump specifications. Furthermore, Fig. 15 shows a partial schematic cross-sectional plan view of the riding type lawn mower in Fig. 14.

As shown in Figs. 14 and 15, a riding type lawn mower 100 with high dump specifications is structured to self-propels by a pair of right and left freely steerable front wheels 122 and a pair of right and left freely drivable rear wheels 123.

The riding type lawn mower 100 is provided with a riding type self-propelled vehicle 116 which has a driving part equipped with a driving seat 103 on the rear part of the vehicle body, and a mowed grass collecting unit 130 equipped with a collector 132, the mowed grass collecting unit capable of being removably coupled to a support frame 131 which is fixed to the rear part of a vehicle body frame 104 of the self-propelled vehicle 116. Furthermore, the riding type lawn mower 100 is provided with a mower 120 which is coupled between front and rear wheels of the vehicle body frame 104 of the self-propelled vehicle 116 via a link mechanism 110.

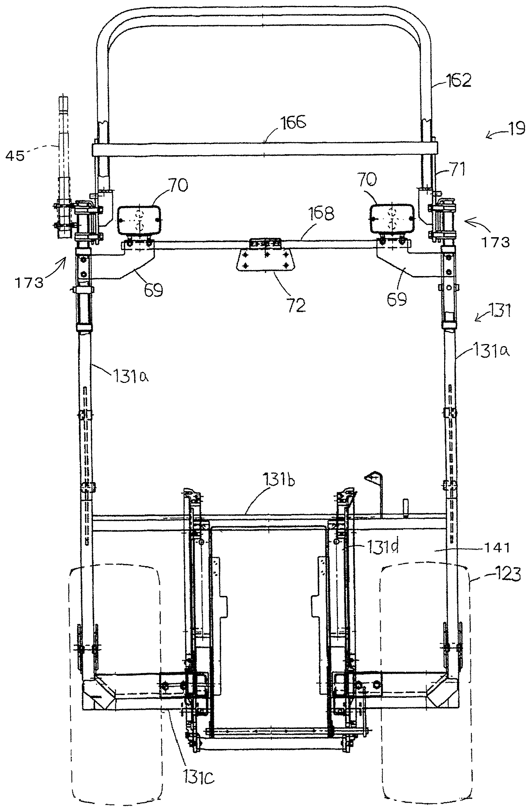

Furthermore, the collector support frame 131 constitutes an approximately rectangular frame body which is provided with a pair of right and left main support frames 131a which is provided at the back of the driving seat 103 and is disposed in the vertical direction with respect to the self-propelled vehicle 116, a central part fixation frame 131b (Fig. 20) which fixedly couples the main support frames 131a to each other at the central part, a central part support frame 131d which supports the lower end part of the central part fixation frame 131b, and a lower fixation frame 131c which couples the lower end part of the main support frames 131a, 131a to the central part support frame 131d.

The self-propelled vehicle 116 as a main body of the riding type lawn mower 100 is provided with an engine 105 (Fig. 15) provided on the front part of the vehicle body frame 104, and a power extraction mechanism (not shown in figure) provided below the engine 105. Power from the engine 105 extracted by the power extraction mechanism is transmitted to the mower 120 via a transmission belt (not shown in figure), a rotation transmission shaft (not shown in figure), etc.

The link mechanism 110 is composed of a pair of right and left sway links 111 which is vertically swingably supported by the vehicle body frame 104, etc. The tip end part of the pair of right and left sway links 111 is coupled to a rear coupling member 121 which is positioned on the rear part of the mower 120. Furthermore, a lift cylinder 115 having one end fixed to the lower part of the driving seat 103 is coupled in the vicinity of the tip end part of the sway links 111.

The link mechanism 110 is operated to swing vertically with respect to the vehicle body frame 104 by operating the pair of right and left sway links 111 to swing by the lift cylinder 115. It is thus possible to perform lifting and lowering operation to a lowered operative state where a support wheel 125 supporting the mower 120 on the front and back sides is brought into contact with the ground, and a lifted inoperative state each support wheel 125 is lifted from the ground.

When the riding type lawn mower 100 is travelled while putting the mower 120 into the lowered operative state, the mower 120 drives cutting blades 113 juxtaposed to each other in the lateral direction inside a cutting blade housing 106 to rotate about axial center of driving shafts 101, 102, thereby performing the mowing by each of the cutting blades 113. The mowed grasses are discharged from a mowed grasses discharge duct 118 positioned above the rear part of the cutting blade housing 106 by wind generated by the rotation of the cutting blades 113. In addition, the cutting blades 113 juxtaposed to each other in the lateral direction rotate in the reverse direction to each other so as to cut grasses with efficiency.

The mowed grasses discharged from a shooter 119 are delivered into the collector 132 by the conveyance action by means of wind from the cutting blade 113, and the guidance action by the shooter 119 provided between the right and left rear wheels 123 pairing up with each other in the front-back direction of the self-propelled vehicle 116, and then collected and stored by the collector 132. A front receiving plate 141 for receiving the front side of the collector 132 is attached to the right and left inner sides of the collector support frame 131.

Next, the structure of the mowed grass collecting unit 130 and its circumference will be described.

More specifically, as shown in Fig. 14, the mowed grass collecting unit 130 is provided with the collector 132 for storing mowed grasses described below which is liftably supported by an elevation and discharge port opening/closing link 170 via a rotary support shaft 171, a mowed grass discharge port 135 which is provided at the rear end side of the collector 132, an openable lid 136 for opening and closing the mowed grass discharge port 135, a pair of upper and lower lift link mechanisms 140 which is provided on both right and left sides of the collector 132, elevation cylinders 150 which are provided on both right and left sides of the collector 132, dump cylinders 160 which are provided on both right and left rear end sides of the collector 132 so as to open and close the openable lid 136 of the collector 132, a pair of right and left coupling bodies 180 for removably coupling an end of the pair of upper and lower lift link mechanisms 140 to the support frame 131, and a hydraulic piping system 190 having a removable quick coupler for transmitting hydraulic pressure from the main body side of the riding type lawn mower 100 to various hydraulic cylinders (150, 160).

Furthermore, as shown in Fig. 14, in the pair of upper and lower lift link mechanism 140, a pair of upper and lower lifting arms 140a and 140b is provided on both right and left surface sides of the collector 132, and the front ends of the pair of upper and lower lifting arms 140a, 140b are coupled to the coupling bodies 180 to be able to be turned vertically.

In the coupling bodies 180 which couple each of the right and left lifting arms 140a and 140b, the left coupling body 180 is coupled to the upper end part of the left main support frame 131a, and the right coupling body 180 is coupled to the upper end part of the right main support frame 131a, each of coupling bodies being coupled at the position higher than the driving seat 103.

Furthermore, a pair of right and left elevation and discharge port opening/closing links 170 is coupled to the right and left rear end of the pair of upper and lower lifting arms 140a and 140b so that lifting arms 140a and 140b are configured to be able to turn vertically.

Furthermore, the elevation and discharge port opening/closing link 170 supports the main body frame 132a fixed to the collector 132 so as to be able to turn via the rotary support shaft 171 provided between the coupled positions to the rear ends of each of the lifting arms 140a and 140b.

Furthermore, terminal end part 160a of the cylinder main body of the dump cylinder 160 is coupled to the upper end part side of the elevation and discharge port opening/closing link 170 so as to be able to turn, and a piston tip end part 160b of the dump cylinder 160 is coupled to a main body sub-frame 132b fixed to the collector 132 so as to be able to turn.

Furthermore, the piston tip end part 150a of the elevation cylinder 150 is coupled to the underside of the lifting arm 140b so as to be able to turn freely, and a terminal end part 150b of the cylinder main body is coupled to a coupling plate 151, which is removably fixed to the lateral lower end part of the support frame 131, so as to be able to turn freely. When the mowed grass collecting unit 130 is removed from the support frame 131, the coupling plate 151 is configured to be able to release the fixation to the support frame 131 so as to fix the support frame to an elevation cylinder retaining plate 152 which is provided on the lower end of the collector 132.

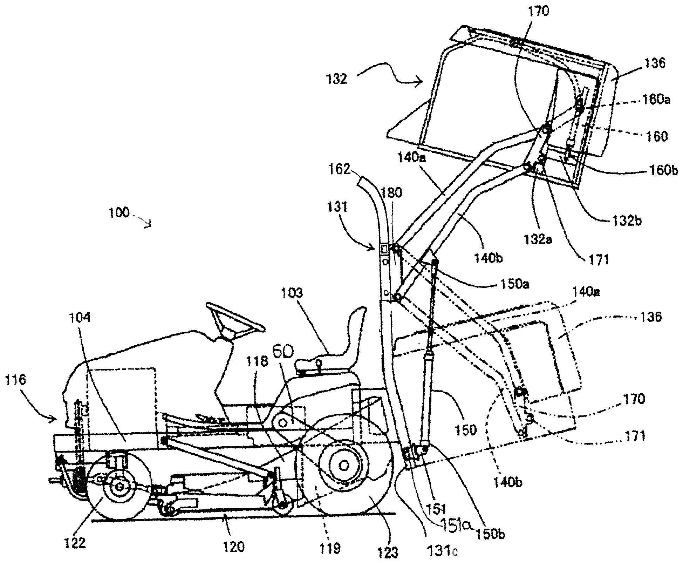

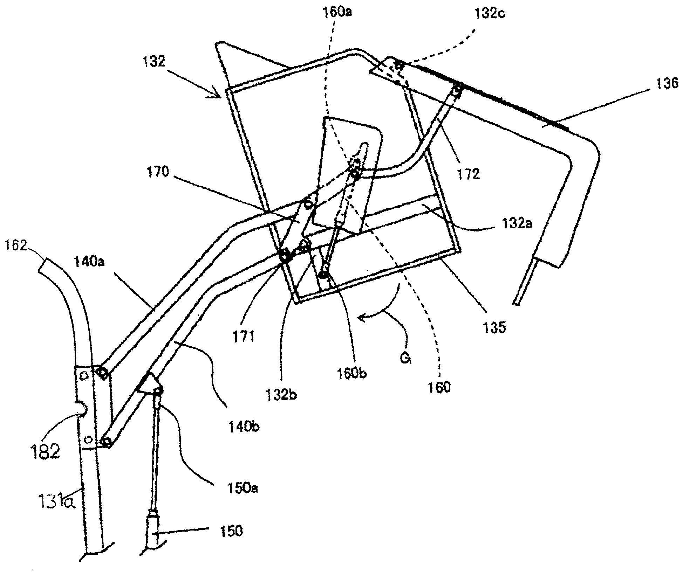

The elevation operation of the collector 132 and opening/closing operation of the openable lid 136 for discharging grasses will be described with reference to Figs. 16 and 17.

Fig. 16 is a schematic side view for explaining the elevation operation of the collector 132, and Fig. 17 is a schematic side view for explaining the opening/closing operation of the openable lid 136 of the collector 132.

First, the elevation operation of the collector 132 will be described with reference to Fig. 16.

An elevation operation lever (not shown in figure) provided in the riding type lawn mower 100 is slid to the lifting side, so that a pair of right and left elevation cylinders 150 starts operating in the extending direction. The terminal end part 150b of the cylinder main body of the pair of right and left elevation cylinders 150 is fixed to the lateral lower end part of a pair of right and left main support frames 131a via the coupling plate 151, and this configuration raises a pair of right and left lifting arms 140b to which the piston tip end part 150a of the elevation cylinder 150 is coupled, and a pair of right and left lifting arms 140a which is coupled to the lifting arm 140b via the elevation and discharge port opening/closing link 170.

On the other hand, the collector 132 is supported by a pair of right and left elevation and discharge port opening/closing links 170 via the rotary support shaft 171 so as to be able to turn, and the piston tip end part 160b of a pair of right and left dump cylinders 160 attached to the pair of right and left elevation and discharge port opening/closing links 170 is coupled to the main body sub-frame 132b of the collector 132 so as to be able to turn, and thus the collector 132 is raised along with the rising of the lifting arms 140a and 140b, as shown in Fig. 16.

Next, the opening/closing operation of the openable lid 136 of the collector 132 will be described with reference to Fig. 17.

As shown in Fig. 16, the collector 132 is elevated to a predetermined height to stop elevating, and then a discharge port opening/closing operation lever (not shown in figure) provided in the riding type lawn mower 100 is slid to the opening side, so that the pair of right and left dump cylinders 160 start operating in the extending direction.

Since the cylinder main body of each of the pair of right and left dump cylinders 160 is fixed at the terminal end part 160a to upper end part of the pair of right and left elevation and discharge port opening/closing links 170 so as to be able to turn, the collector 132 turns in the direction of an arrow G about the axial center of the rotary support shaft 171 in the lateral direction of the collector (the vertical direction to the sheet of paper in Fig. 17) along with the extension of the piston tip end part 160b which is fixed to the main body sub-frame 132b of the collector 132.

On the other hand, the openable lid 136, which is supported by an opening/closing support shaft 132c on the outer wall of the collector 132 so as to be able to turn, is going to turn in the direction of an arrow G by its own weight along with the turning of the collector 132, however, a pair of right and left opening/closing support frames 172 prevents the action concerned. Thereby, the openable lid 136 which closes the mowed grass discharge port 135 is flipped up backward as shown in Fig. 17, and then the mowed grasses stored in the collector 132 falls from the discharge port at the upper and rear part of the collector 132 by their weight.

In addition, an end of each of the pair of right and left opening/closing support frames 172 is fixed to the upper end side of each of the pair of right and left elevation and discharge port opening/closing links 170 so as to be able to turn freely, and the other end thereof is fixed to the inner wall of the openable lid 136 so as to be able to turn freely.

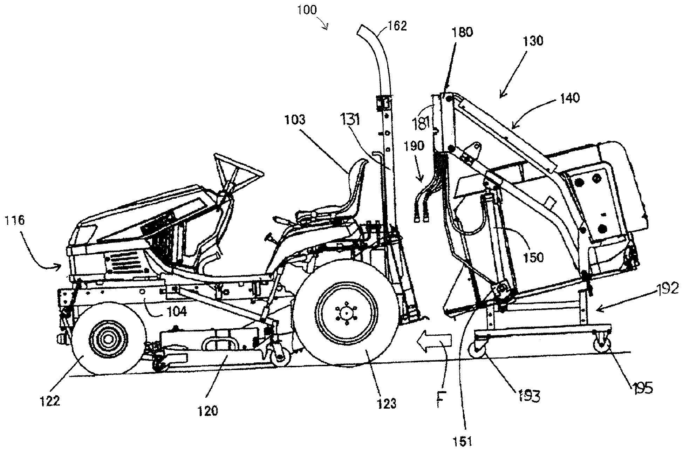

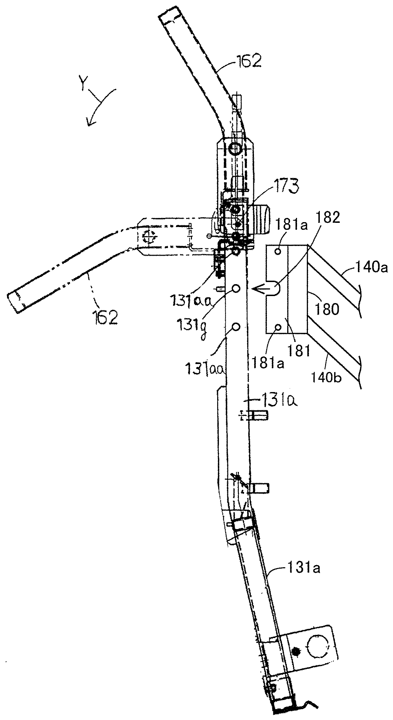

Fig. 18 is a side view showing the state where the mowed grass collecting unit 130 is arranged in the rear of a support frame 131 of the riding type lawn mower in Fig. 14, and Fig. 19 is a side view of a coupling part between the support frame 131 of the riding type lawn mower and the coupling body 180. Furthermore, Fig. 20 shows a front view of the support frame 131.

The collector 132 of the riding type lawn mower 100 shown in Fig. 14 is configured to be removable from the support frame 131. As shown in Fig. 18, the mowed grass collecting unit 130 mounted on a carrier 192 which can be moved by a front caster 193 and a rear caster 195 is arranged posterior to the support frame 131 of the riding type lawn mower and moved forward (the direction of an arrow F).

A coupling member 181 having an approximately U-shaped cross section is fixed to the left coupling body 180, the coupling member 181 fitted to the left main support frame 131a having a hollow square pole shape so as to surround three outer peripheral surfaces. In addition, a right coupling member (not shown in figure) has the structure that is symmetrical to the coupling member 181, and thus the explanation thereof is omitted.

Furthermore, the coupling member 181 has a notched part 182 formed in the central part of the lateral surface thereof. The shape of the notched part 182 is configured to be able to fit to the outer shape of a guide pin 131g that is a cylindrical protruding part provided at the position corresponding to the left main support frame 131a. Then, the main support frame 131a has holes 131aa opened above and below the guide pin 131g so as to be placed and attached to the positions of holes 181a on the coupling member 181 by pins (not shown). The same goes for the attachment to the right main support frame 131a.

Furthermore, the coupling plate 151 which is attached to the lower lateral surface of the mowed grass collecting unit 130 is fixed to lower end part of the lateral surface of the support frame 131 by a fixing screw 151a (Fig. 16). This operation is performed on both right and left sides in a similar way.

Then, a quick coupler of the hydraulic piping system 190 is connected to a coupler on the main body side. Finally, an elevation operation lever (not shown in figure) provided in the riding type lawn mower 100 is operated to slightly lift up the collector 132 so as to produce a clearance between the bottom surface of the collector 132 and the carrier 192, and then the carrier 192 is slid backward to be removed.

Then, as shown in Fig. 20, a riding type lawn mower with high dump specifications is also characterized in providing a ROPS 19 above the support frame 131, similar to that with low dump specifications. More specifically, a U-shaped ROPS frame 162, which has the lateral width narrower than that between the main support frames 131a and 131a, is attached to the upper end of each of the right and left main support frames 131a, 131a by a fixture such as a bolt and a nut, with the opening directed downward, so as to be able to turn in the front-back direction.

The right and left main support frames 131a, 131a are utilized to form the ROPS 19 composed of the ROPS frame 162 on the upper part thereof, so that it is possible to secure the ROPS with a simple configuration.

Furthermore, since the ROPS frame 162 attached to the upper part of the main support frames 131a has the width narrower than the main support frames 131a, no burden is placed on the main support frames 131a. Then, the collector 132 is supported by the main support frames 131a, 131a having the width wider than the ROPS frame 162 via the coupling body 180, and thus it is possible to stabilize the elevation and discharge operations of the collector 132 of the lawn mower with high dump specifications so as to improve the efficiency of mowing and collecting works of grasses.

Then, in the riding type lawn mower with high dump specifications, the ROPS frame 162 may be configured to be able to turn forward (the direction of an arrow Y) with a coupling part 173 to the support frame 131 as a supporting point, similar to the case of that with low dump specifications. The ROPS frame 162 is attached to the support frame 131 via supports 71 such as brackets by a fastener such as a bolt, a nut, a pin, a screw, etc., so as to configure the coupling part 173, which makes it possible to perform attachment and removal in an easy way. In no-working time, the ROPS frame 162 is folded to provide a compact structure.

Furthermore, the right and left main support frames 131a and 131a coupled by a ROPS support frame coupling pipe 168 provides the more firm support structure. The ROPS support frame coupling pipe 168 is coupled to the main support frames 131a and 131a via the support members 69 such as stays and brackets. Then, the lamps 70 such as winkers, brake lamps, emergency lamps, working lamps, etc., are attached to the ROPS support frame coupling pipe 168, so that the attachment is structured to be simple, thereby enabling the space formed of the main support frames 131a and 131a to be used effectively. Furthermore, a number plate 72 may be attached.

The lamps 70 are provided on the ROPS support frame coupling pipe 168 between the right and left main support frames 131a and 131a, so that the turning of the ROPS frame 162 is not prevented, thereby improving workability.

Then, the turning support point of the ROPS frame 162 is provided in the vicinity of the upper part of the coupling body 180 which is the coupling part with collector 132, so that it is possible to easily attach and remove the collector 132 to and from a bodywork, and also to easily turn the ROPS frame 162.

In addition, also in the riding type lawn mower with high dump specifications, the lower end part of the support frame 131 (corresponding to the collector support frames 7 of the lawn mower with low dump specifications) is coupled to the right and left collector lower frames 64, 64 protruding backward from the chain case coupling frame 62 coupling the right and left chain cases 60 and 60, similar to the case of that with low dump specifications. Fig. 5 and Fig. 6 thus have the structure common to each other. The support frame 131 attached to the chain case coupling frame 62 via the support frame 61 and the collector lower frame 64 provides the firm support structure of the ROPS frame 162 on the upper part thereof.

Furthermore, the right and left sides of the ROPS frame 162 coupled by a ROPS frame coupling pipe 166 ensures the strength of the ROPS frame 162.

The shooter 119 is provided on the upper part of the chain case coupling frame 62 and between the right and left main support frames 131a, 131a. The shooter 119 for conveying the lawn grasses from the mower 120 to the collector 132 is installed in a space formed of the chain case coupling frame 62, the right and left main support frames 131a, 131a, etc., so that it is possible to make use of the space, resulting in efficient arrangement.

Next, the description will be made regarding a pedal mechanism provided on the floor 26 of the driving seat 25 of the riding type lawn mower with low dump specifications in Fig. 1. In addition, the riding type lawn mower with high dump specifications in Fig. 14 is provided with a similar pedal mechanism.

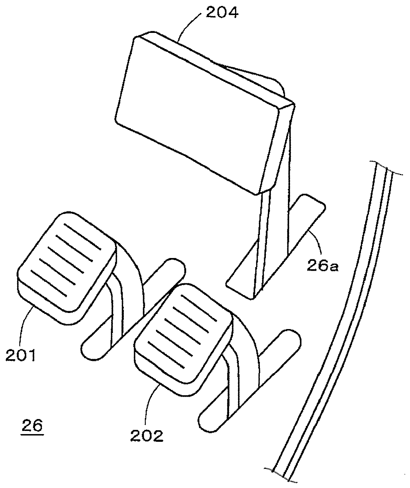

Fig. 21 is a perspective view showing a right surface side of the floor 26. As shown in Fig. 21, the right surface side of the floor 26 is provided with a forward movement pedal 201 for moving the bodywork forward, and a backward movement pedal 202 for moving the bodywork backward. Moreover, a brake pedal 204 for stopping the travelling is provided in front of the forward movement pedal 201 and the backward movement pedal 202.

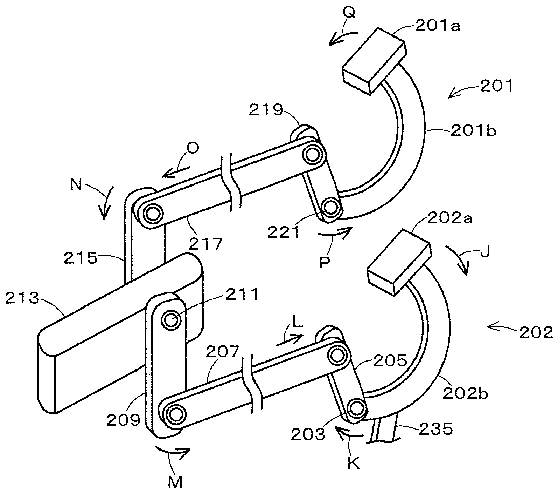

Fig. 22 is a simplified schematic diagram (perspective view) explaining the operations of the forward movement pedal 201 and the backward movement pedal 202.

The forward movement pedal 201 and the backward movement pedal 202 are configured so that, when one is depressed forward, the other moves in the opposite direction (backward). For example, when a tread 202a of the backward movement pedal 202 is depressed in the direction of an arrow J, the backward movement pedal arm 202b turns in the direction of an arrow K about a supporting point 203, and the backward movement pedal plate 205 also turns in the direction of an arrow K so as to draw a backward movement rod 207 in the direction of an arrow L (forward). Then, a backward movement support arm 209, which is coupled to the rear end of the backward movement rod 207 so as to be able to turn, moves in the direction of an arrow M about a trunnion shaft 211 of the HST 200.

Furthermore, the trunnion shaft 211 is firmly fixed to the backward movement support arm 209, and turns along with the backward movement support arm 209. The turning of the trunnion shaft 211 changes the angle of inclination of a swash plate (not shown) for adjusting the hydraulic pressure output from the HST200. Furthermore, it is configured so that the forward movement and the backward movement are switched by the turning direction of the trunnion shaft 211, and the speed becomes higher with increase in the amount of depression of the pedal. Then, the trunnion shaft 211 is also fixed firmly to a forward movement support arm 215 across a trunnion shaft support plate 213.

Therefore, the forward movement support arm 215 moves in the direction of an arrow N about the trunnion shaft 211, so that a forward movement rod 217 is drawn in the direction of an arrow O (backward) to turn a forward movement pedal plate 219 in the direction of an arrow P about a supporting point 221. Therefore, a forward movement pedal arm 201b turns in the direction in an arrow Q, so that the forward movement pedal 201 is resultingly actuated backward.

Likewise, when a tread 201a of the forward movement pedal 201 is depressed forward, the backward movement pedal 202 is conversely actuated backward.

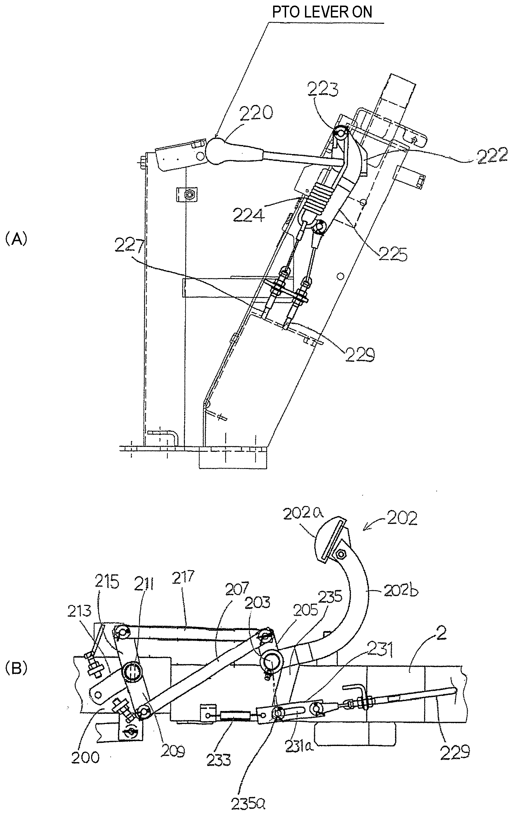

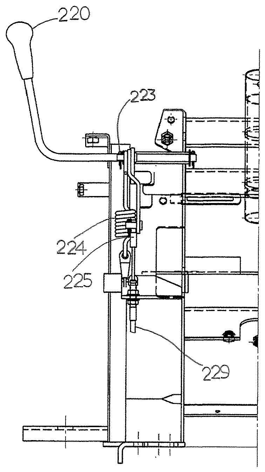

Fig. 23(A) and Fig. 24(A) show left side views in the vicinity of the steering post 27, and Fig. 23(B) and Fig. 24(B) show right side views of the backward movement pedal 202. Fig. 23 shows the state where a PTO lever 220 is off (turned off), and Fig. 24 shows the state where the PTO lever 220 is on (turned on) (main section). Furthermore, Fig. 25 shows a rear view in the vicinity of the PTO lever 220 in Fig. 23.

When the PTO lever 220 is rotated forward (the direction of an arrow Y), a PTO lever plate 222 firmly fixed to the base part of the PTO lever 220 is also turned forward so as to move a shaft 223 on the rear end part upward. At this time, a spring (an elastic member such as a spring) 224 coupled to the shaft 223 and a PTO cable (which may be a wire) 227 coupled to the spring 224 are pulled upward to turn on a PTO clutch (not shown) coupled to a the PTO cable 227, thereby driving an input shaft (PTO shaft, not shown) on the side of the mower 1.

Furthermore, at the same time, a cable support member 225 and a backward movement restraining cable (which may be a wire) 229 coupled to the shaft 223 are also pulled upward, and a backward movement restraining plate (long hole plate) 231 coupled to the backward movement restraining cable 229 moves in the direction of an arrow S to be located at the position shown in Fig. 24(B). The backward movement restraining plate 231 is coupled with a spring (long hole plate spring) 233 at the end part opposite to the coupling part to the backward movement restraining cable 229, and is energized by the spring 233 in the direction opposite to the direction of an arrow S. The other end of the spring 233 is fixed to the vehicle body frame 2, and the spring 233 extends by moving the backward movement restraining plate 231 in the direction of an arrow S.

A pin 235a is provided at the lower end part of a backward movement restraining and coupling arm 235 which is firmly fixed to the backward movement pedal arm 202b, and the pin 235a is fit into a long hole 231a provided on the backward movement restraining plate 231. Accordingly, the pin 235a of the backward movement restraining and coupling arm 235 is located at approximately the center of the long hole 231a when the PTO lever 220 is off (Fig. 23(B)), whereas located on the end side of the long hole 231a when the PTO lever 220 is on (on the rear side in the example in Fig. 24(B)).

On the other hand, when the backward movement pedal 202 is depressed, the trunnion shaft 211 turns and the vehicle speed changes (backward movement transmission coupling mechanism), as described above. At this time, the lower end part of the backward movement restraining and coupling arm 235 moves backward (the direction opposite to the direction of an arrow S) depending on the depression of the backward movement pedal 202. Since the movable range of the pin 235a to the rear side within the long hole 231a is large when the PTO lever 220 is off, the movable range of the backward movement restraining and coupling arm 235 also becomes larger, thereby enabling the backward movement pedal 202 to be depressed sufficiently. However, since the movable range of the pin 235a to the rear side within the long hole 231a is small when the PTO lever 220 is on, the movable range of the backward movement restraining and coupling arm 235 also becomes smaller, and thus the backward movement pedal 202 cannot be depressed sufficiently (PTO backward movement regulating/coupling mechanism).

Therefore, when the PTO lever 220 is on, the vehicle speed is regulated to be lower (e.g., 1km/h or below) even if the backward movement pedal 202 is depressed. This regulated speed can be freely changed by adjusting the backward movement restraining cable 229. In addition, instead of the backward movement restraining cable 229, a link mechanism (not shown) may be employed to couple the PTO lever 220 to the backward movement restraining plate 231.

Since the mower 1 is driven when the PTO lever 220 is on, it is not preferable to travel at a high speed, and there are movements that the travelling at a low speed is legitimate. Therefore, the vehicle speed is regulated to be low when the PTO lever 220 is on, thereby improving the safety. Furthermore, this can address laws and regulations in the future.

On the other hand, an operator may desire the travelling at a high speed even when the PTO lever 220 is on.

The backward movement pedal 202 is provided with a backward movement regulation releasing pedal (backward movement coupling pedal) 240 for releasing the regulation on speed to be lower. Thus, depressing the backward movement regulation releasing pedal 240 can change the vehicle speed even when the PTO lever 220 is on, similar to the case where the PTO lever 220 is off, thereby enabling the travelling at a high speed.

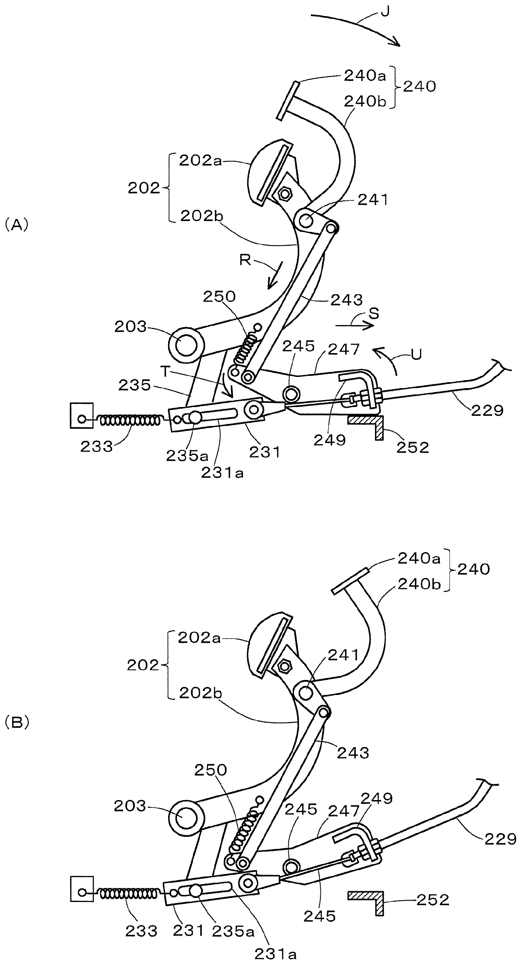

Fig. 26 shows another example (side view) of the backward movement pedal part 202. Fig. 26(A) shows the state before the backward movement regulation releasing pedal 240 is operated (at the time of regulating the speed to be lower), and Fig. 26(B) shows the state after the backward movement regulation releasing pedal 240 is operated (when the regulation of the speed to be lower is released). These are the schematic diagrams showing the actuation.

As shown in Fig. 26(A), a backward movement regulation releasing pedal arm 240b of the backward movement regulation releasing pedal 240 is firmly fixed at the rear part of the lower end thereof a supporting point shaft 241 which is coupled to the backward movement pedal arm 202b so as to be able to turn. When a tread 240a of the backward movement regulation releasing pedal 240 is depressed in the direction of an arrow J, the rear part of the lower end of the backward movement regulation releasing pedal arm 240b turns about the supporting point shaft 241, so that a backward movement regulation releasing rod 243, which is coupled to the front part of the lower end concerned so as to be able to turn, is actuated in the direction of an arrow R.

The lower end part of the backward movement regulation releasing rod 243 is coupled to the rear end of a backward movement regulation plate 247 so as to be able to turn, and the rear end of the backward movement regulation plate 247 turns in the direction of an arrow T about a supporting point shaft 245 coupled to the vehicle body frame 2. The rear end of the backward movement regulation plate 247 is connected with one end part of a return spring 250 which has relatively stronger tension than the spring 233 coupled to the backward movement restraining cable 229, and the other end of the return spring 250 is coupled to the lower part of the backward movement pedal arm 202b so as to be able to turn. More specifically, the rear end of the backward movement regulation plate 247 is always energized upward (the direction opposite to the direction of an arrow R) by the return spring 250, and the front end of the backward movement regulation plate 247 is always energized downward. Therefore, the lower part of the front end of the backward movement regulation plate 247 is brought into contact with the backward movement regulation plate support part 252, so that the position of the backward movement regulation plate 247 is kept (the state over supporting point).

On the other hand, the front end of the backward movement regulation plate 247 is coupled to an outer reception 249 of the backward movement restraining cable 229. Therefore, when the backward movement regulation plate 247 turns about the supporting point shaft 245, as shown in Fig. 26(B), the front end of the backward movement regulation plate 247 turns in the direction of an arrow U to be drawn apart from the backward movement regulation plate support part 252, and the backward movement restraining cable 229 is loosened (the state over supporting point is off). The backward movement restraining plate 231 moves in the direction opposite to the direction of an arrow S by the tension of the spring 233, and thus the pin 235a of the backward movement restraining and coupling arm 235 is located closer to the center of the long hole 231a. More specifically, since the location is the same as the case where the PTO lever 220 is off, the movable range of the backward movement restraining and coupling arm 235 becomes larger (pedal backward movement regulation releasing mechanism). Therefore, it is possible to sufficiently depress the backward movement pedal 202 while operating the backward movement regulation releasing pedal 240, thereby enabling the travelling at a high speed.

In addition, in the state shown in Fig. 26(A), if only the backward movement pedal 202 is operated, it merely changes the postures of the backward movement regulation releasing rod 243 and the return spring 250 slightly and the backward movement regulation plate 247 does not turn because the backward movement regulation releasing pedal arm 240b and the return spring 250 are coupled to the backward movement pedal arm 202b so as to be able to turn. Therefore, the state where the backward movement is regulated is maintained.

Then, when a foot is taken off from the backward movement pedal 202 after backward travelling, the state returns to that shown in Fig. 26(A) by the return spring 250.

According to this structure, when the backward movement speed is not desired to be regulated to be lower, it can be easily released by operating the backward movement pedal 202 simultaneously with the backward movement regulation releasing pedal 240. Therefore, when a quick backward movement is desired, it is possible to easily change the vehicle speed on operator's will, thereby enabling the travelling at a high speed.

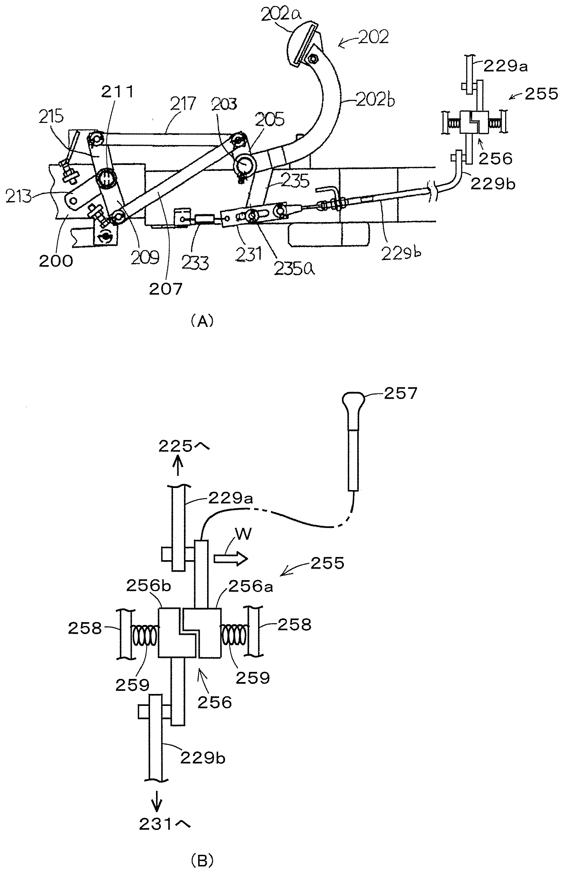

Fig. 27(A) is a right side view of the backward movement pedal part 202 in the case where an intermediate link 255 is provided in the backward movement restraining cable 229; and Fig. 27(B) is an enlarged view (schematic diagram) of the intermediate link 255. The example described above describes the case where the regulation on the speed to be lower is released by the operation pedal the when the PTO lever 220 is on, while this example describes the case where the regulation on the speed to be lower is released by an operation lever.

For example, an intermediate link 255 is provided between a backward movement restraining cable 229a connected to the side of the PTO lever 220 and a backward movement restraining cable 229b connected to the side of a backward movement restraining plate 231 to turn on and off a claw clutch (on/off means) 256 of the intermediate link 255, so that it is possible to select the regulation on the speed to be lower and the release of the regulation on the speed to be lower.

The claw clutch 256 is composed of a clutch plate 256a which is connected to the backward movement restraining cable 229a on the side of the PTO lever, and a clutch plate 256b which is connected to the backward movement restraining cable 229b on the side of the backward movement restraining plate, and is energized to be always on (connected state) by the springs 259, 259 on both the ends thereof.

Each of the clutch plates 256a, 256b is supported on the bodywork side by support parts 258, 258 via the springs 259, 259. On/off of the claw clutch 256 is performed by a backward movement restraining operation lever (on/off means operating lever) 257 which moves the clutch plate 256a connected to the backward movement restraining cable 229a on the PTO lever side in the direction of an arrow W. The backward movement restraining operation lever 257 is coupled to the clutch plate 256a by a link mechanism (not shown) or a wire, etc. If the backward movement restraining operation lever 257 is provided in the steering post 27 or a fender 24 in the vicinity of the driving seat 25, excellent operability is offered.

If an operator draws the backward movement restraining operation lever 257 to turn the clutch off when the PTO lever 220 is on, the coupling of the PTO backward movement regulating/coupling mechanism is cut off, and the energizing force by the spring 233 returns the backward movement restraining plate 231 to the state where the PTO lever 220 is off (lever backward movement regulation releasing mechanism).

In this manner, a simple structure in which the backward movement restraining cable 229 is provided with the intermediate link 255 makes it possible to release the regulation on the speed to be lower at the time of backward movement also by the operation of a lever. Then, when a quick backward movement is desired, it is possible to easily change the vehicle speed on operator's will, thereby enabling the travelling at a high speed.

Furthermore, the backward movement restraining cable 229 is provided with the intermediate link 255 so as to perform the operation not by a so-called direct operation but indirectly, so that it is possible to prevent the damage of low speed regulation member such as the backward movement restraining plate 231.

Then, if the position of the backward movement restraining operation lever 257 can be fixed not only during the operation but after the operation, it is possible to focus on the travelling operation without being distracted by the operation of the lever. For example, it can be made easier by providing a hooked part of the lever in a lever groove (not shown) of the backward movement restraining operation lever 257 (e.g., a part of a lateral groove is provided in a vertical lever groove).

Then, the intermediate link 255 is arranged posterior to the turning support point 203 of the backward movement pedal 202. Furthermore, the intermediate link 255 is arranged in the vicinity of the backward movement restraining plate 231, so that it is possible to shorten the length of backward movement restraining cable 229b between the backward movement restraining plate 231 and the intermediate link 255. Therefore, the arrangement of the backward movement restraining cable 229b is not complicated, resulting in preventing the damage of the backward movement restraining plate 231.

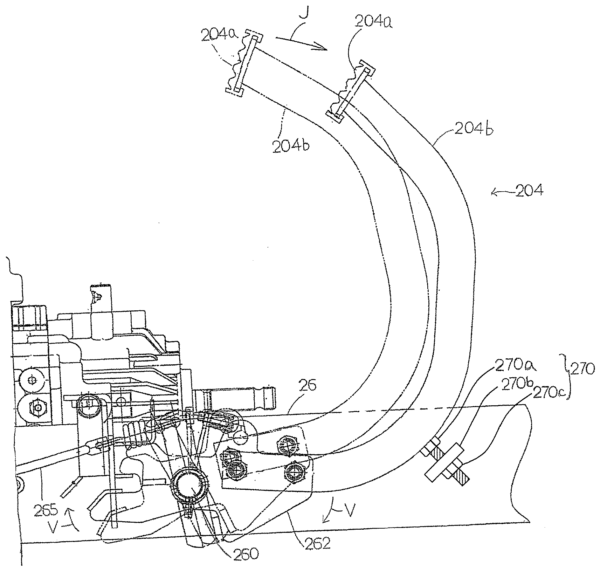

Fig. 28 shows a side view showing a working state of the brake pedal 204.

When a tread 204a of the brake pedal 204 is depressed in the direction of an arrow J, a brake plate 262, which is firmly fixed to a base part of a brake pedal arm 204b (located within the hole 26a of the floor 26), turns in the direction of an arrow V about a turning support point 260 so as to draw a brake cable 265 coupled to a brake plate 262, and then a brake (not shown) coupled to the brake cable 265 is actuated. This example shows an adjustable brake pedal arm stopper 270 which is configured to be adjustable.

More specifically, a screw-type brake pedal arm stopper is employed to turn the bolt part 270a, so that it is possible to change the degree of protrusion from a nut part 270b upward to the side of the brake pedal arm 204b. Furthermore, a screw stopper 270c is below the nut part 270b for preventing the bolt part 270a from protruding too much, so that it is possible to adjust the protrusion within a suitable range.

### [Industrial Applicability]

A riding type lawn mower of the present invention is highly useful as riding type lawn mower for home and industrial use.

To provide a riding type lawn mower in which a ROPS can be mounted as appropriate on a riding type lawn mower with high dump specifications or low dump specifications, thereby enhancing safety.

A riding type lawn mower is provided with a mower 1 between a front wheel 32 and a rear wheel 23, a collector 5 behind the mower 1, support frames 7 for the collector 5, a ROPS support frame 54 provided on the upper part of the collector support frames 7, and having the width wider than the distance between the right and left collector support frames 7, a ROPS frame 52 formed in a U-shape having an opening on the lower part, and coupled at each of lower end parts thereof to right and left upper parts of the ROPS support frame 54, an arm 10 provided to protrude to the front upper end of the collector 5 to be coupled to the coupling frame 50, which couples the right and left collector support frames 7, so as to be able to turn, and a dump cylinder 8 located between the arm 10 and the vehicle body frame 2, and turning the rear part of the collector 5 upward with the coupling frame 50 as a supporting point. The right and left collector support frames 7 are utilized to form a ROPS 9, so that it is possible to achieve a reasonable arrangement with a simple structure.

### [Explanation of Letters or Numerals]

1, 120: Mower
2, 104: Vehicle body frame
3, 119: Shooter
4: Duct port
5, 132: Collector
6: Opening
7: Collector support frame
8, 160: Dump cylinder
9, 19: ROPS
10: Hitch arm
12: Riding type lawn mower (with low dump specifications)
18: Pin
20: Support platform
21: Support shaft
22: Collector mounting platform
23, 123: Rear wheel
24: Fender
25, 103: Driving seat
26: Floor
27: Steering post
28: Steering handle
29: Bonnet
30, 105: Engine
31: Blade
32, 122: Front wheel
33: Discharge port
34: Collector frame
35: Exhaust air chamber
36: Cover
37: Hitch bracket
38: Rear hitch
39: Hitch pin
40: Set pin
41, 141: Front receiving plate
42: Hydraulic case
43: Hydraulic hose
44: Attachment plate
45: Scraping bar
50: Coupling frame
52, 162: ROPS frame
54: ROPS support frame
60: Chain case
61: Support frame
62: Chain case coupling frame
63: Bolt
64: Collector lower frame
65: Nut
66, 166: ROPS frame coupling pipe
68, 168: ROPS support frame coupling pipe
69: Support member
70: Lamp
71: Support
72: Number plate
73, 173: Coupling part
75: Elastic body
80: Groove
82: Coupling part
100: Riding type lawn mower (with high dump specifications)
101, 102: Cutting blade driving shaft
106: Cutting blade housing
110: Link mechanism
111: Sway link
113: Cutting blade
115: Lift cylinder
116: Self-propelled vehicle
110: Link mechanism
118: Mowed grasses discharge duct
121: Rear coupling member
125: Support wheel
130: Mowed grass collecting unit
131: Support frame
135: Mowed grass discharge port
136: Openable lid
140: Lift link mechanisms
150: Elevation cylinder
151: Coupling plate
152: Elevation cylinder retaining plate
170: Elevation and discharge port opening/closing link
171: Rotary support shaft
172: Opening/closing support frame
180: Coupling body
181: Coupling member
182: Notched part
190: Hydraulic piping system
192: Carrier
193: Front caster
195: Rear caster
200: HST
201: Forward movement pedal
202: Backward movement pedal
203: Supporting point
204: Brake pedal
205: Backward movement pedal plate
207: Backward movement rod
209: Backward movement support arm
211: Trunnion shaft
213: HST coupling plate
215: Forward movement support arm
217: Forward movement rod
219: Forward movement pedal plate
220: PTO lever
221: Supporting point
222: PTO lever plate
223: Shaft
224: Spring
225: Cable support member
227: PTO cable
229: Backward movement restraining cable
231: Backward movement restraining plate
233: Spring
235: Backward movement restraining and coupling arm
240: Backward movement regulation releasing pedal
243: Backward movement regulation releasing rod
245: Support shaft
247: Backward movement regulation plate
249: Outer reception
250: Return spring
252: Backward movement regulation plate support part
255: Intermediate link
256: Claw clutch
257: Backward movement restraining operation lever
258: Support part
259: Spring
260: Turning support point
262: Brake plate
265: Brake cable
267: Brake plate stopper
270: Brake pedal arm stopper

## Claims

1. A riding type lawn mower, comprising:
a vehicle body frame (104) provided with front wheels (122) and rear wheels (123);
a mower (120) for cutting lawn grasses;
a pair of right and left chain cases (60) in each of which a transmission member for transmitting rotary power is provided to rotate the rear wheels (123);
a storage container (132) provided behind the mower (120), and storing lawn grasses cut by the mower (120);
a pair of right and left collector support frames (131a) for supporting the storage container (132);
an elevation cylinder (150) moving the storage container (132) upward and downward;
a cylinder for dumping (160) opening a lid (136) of the storage container (132) to discharge lawn grasses upon the elevation cylinder (150) moving the storage container (132) upward; and
a ROPS frame (162) which is formed in a U-shape having an opening on the lower part, coupled at each of the lower end parts thereof to the upper parts of the pair of right and left collector support frames (131a), and having a width smaller than the distance between the pair of right and left collector support frames (131a),
**characterized in that**
the riding type lawn mower further comprises a chain case coupling frame (62) coupling the pair of right and left chain cases (60), and
right and left collector lower frames (64) protrude backward from the chain case coupling frame (62), wherein
each of the lower end parts of the pair of right and left collector support frames (131a) is coupled to the right and left collector lower frames (64), respectively.

2. The riding type lawn mower according to claim 1, wherein:
a shooter (119) is provided to deliver mowed grasses into said storage container (132);
the shooter (119) is provided on the upper part of the chain case coupling frame (62) between the pair of right and left collector support frames (131a, 131a).

3. The riding type lawn mower according to claim 1 or 2, wherein the pair of right and left collector support frames (131a) is coupled by a collector support frame coupling pipe (168) via a support member (69), and wherein a lamp (70) is provided.

## Patentansprüche

1. Aufsitzrasenmäher mit:
einem Fahrzeugkarosserieaufbau (104), der mit Vorderrädern (122) und Hinterrädern (123) versehen ist;
einem Mähwerk (120) zum Schneiden von Rasengräsern;
einem Paar aus einem rechten und linken Kettengehäuse (60), in denen jeweils ein Übertragungsbauteil zum Übertragen einer Rotationsenergie vorgesehen ist, um die Hinterräder (123) zu drehen;
einem Sammelbehälter (132), der hinter dem Mähwerk (120) vorgesehen ist und durch das Mähwerk (120) geschnittene Rasengräser speichert;
einem Paar aus einem rechten und linken Auffangvorrichtungsstützrahmen (131a) zum Stützen des Sammelbehälters (132);
einem Hubzylinder (150), der den Sammelbehälter (132) nach oben und nach unten bewegt;
einem Zylinder zum Ausschütten (160), der einen Deckel (136) des Sammelbehälters (132) öffnet, um Rasengräser abzugeben, wenn der Hubzylinder (150) den Sammelbehälter (132) nach oben bewegt; und
einem ROPS-Rahmen (162), der in einer U-Form mit einer Öffnung an dem unteren Teil ausgebildet ist, der an jedem von seinen unteren Endteilen an die oberen Teile des Paares aus rechtem und linkem Auffangvorrichtungsstützrahmen (131a) gekoppelt ist und eine Breite hat, die kleiner als der Abstand zwischen dem Paar aus rechtem und linkem Auffangvorrichtungsstützrahmen (131a) ist,
**dadurch gekennzeichnet, dass**
der Aufsitzrasenmäher des Weiteren einen Kettengehäusekopplungsrahmen (62) aufweist, der das Paar aus rechtem und linkem Kettengehäuse (60) koppelt, und
einen rechten und linken unteren Auffangvorrichtungsrahmen (64), der von dem Kettengehäusekopplungsrahmen (62) nach hinten vorsteht, wobei
jeder der unteren Endteile des Paares aus rechtem und linkem Auffangvorrichtungsstützrahmen (131a) an den rechten bzw. linken unteren Auffangvorrichtungsrahmen (64) gekoppelt ist.

2. Aufsitzrasenmäher gemäß Anspruch 1, wobei:
ein Auswurf (119) vorgesehen ist, um die gemähten Gräser in den Sammelbehälter (132) zu befördern;
der Auswurf (119) an dem oberen Teil des Kettengehäusekopplungsrahmens (62) zwischen dem Paar aus rechtem und linkem Auffangvorrichtungsstützrahmen (131a, 131a) vorgesehen ist.

3. Aufsitzrasenmäher gemäß Anspruch 1 oder 2, wobei das Paar aus rechtem und linkem Auffangvorrichtungsstützrahmen (131a) durch ein Auffangvorrichtungsstützrahmenkopplungsrohr (168) über ein Stützbauteil (69) gekoppelt ist, und wobei eine Lampe (70) vorgesehen ist.

## Revendications

1. Tondeuse à gazon de type autoporté comprenant :
un châssis de véhicule (104) prévu avec des roues avant (122) et des roues arrière (123) ;
une tondeuse (120) pour couper l'herbe ;
une paire de carters de chaîne droit et gauche (60) dans chacun desquels on prévoit un élément de transmission pour transmettre l'énergie rotative afin de faire tourner les roues arrière (123) ;
un contenant de stockage (132) prévu derrière la tondeuse (120) et stockant l'herbe coupée par la tondeuse (120) ;
une paire de bâtis de support de collecteur droit et gauche (131a) pour supporter le contenant de stockage (132) ;
un cylindre d'élévation (150) déplaçant le contenant de stockage (132) vers le haut et vers le bas ;
un cylindre pour amortir (160) l'ouverture d'un couvercle (136) du contenant de stockage (132) pour décharger l'herbe après que le cylindre d'élévation (150) a déplacé le contenant de stockage (132) vers le haut ; et
un bâti ROPS (162) qui est formé selon une forme de U ayant une ouverture sur la partie inférieure, couplé au niveau de chacune de ses parties d'extrémité inférieure aux parties supérieures de la paire de bâtis de support de collecteur droit et gauche (131a) et ayant une largeur inférieure à la distance entre la paire de bâtis de support de collecteur droit et gauche (131a),
**caractérisée en ce que** :
la tondeuse à gazon de type autoporté comprend un bâti de couplage de carter de chaîne (62) couplant les paires de carters de chaîne droit et gauche (60), et
des bâtis inférieurs de collecteur droit et gauche (64) font saillie vers l'arrière à partir du bâti de couplage de carter de chaîne (62), dans laquelle :
chacune des parties d'extrémité inférieure de la paire de bâtis de support de collecteur droit et gauche (131a) est couplée aux bâtis inférieurs de collecteur droit et gauche (64) respectivement.

2. Tondeuse à gazon de type autoporté selon la revendication 1, dans laquelle :
un lanceur (119) est prévu pour délivrer l'herbe tondue dans ledit contenant de stockage (132) ;
le lanceur (119) est prévu sur la partie supérieure du bâti de couplage de carter de chaîne (62) entre la paire de bâtis de support de collecteur droit et gauche (131a, 131a).

3. Tondeuse à gazon de type autoporté selon la revendication 1 ou 2, dans laquelle la paire de bâtis de support de collecteur droit et gauche (131a) est couplée par un tuyau de couplage de bâti de support de collecteur (168) via un élément de support (69), et dans laquelle une lampe (70) est prévue.
